Europäisches Patentamt

European Patent Office

Office européen des brevets

(19)

(11) Publication number: **0 070 194**
**A1**

(12) **EUROPEAN PATENT APPLICATION**

(21) Application number: **82303679.3**

(22) Date of filing: **13.07.82**

(51) Int. Cl.³: **A 61 C 1/08**
**A 61 C 1/18**

(30) Priority: **15.07.81 DK 3165/81**

(43) Date of publication of application:
**19.01.83 Bulletin 83/3**

(84) Designated Contracting States:
**CH DE FR GB IT LI SE**

(71) Applicant: **Hansen, Flemming Julin**
**No. 38 Metalbuen**
**DK-2750 Ballerup(DK)**

(72) Inventor: **Hansen, Flemming Julin**
**No. 38 Metalbuen**
**DK-2750 Ballerup(DK)**

(74) Representative: **Dixon, Sarah et al,**
**Reddie & Grose 16 Theobalds Road**
**London WC1X 8PL(GB)**

(54) Coupling assembly for a driven tool and a coupling for use therein.

(57) A coupling assembly for a driven tool such as a dentist's drill comprises a coupling (16) for connecting the tool to conduits (26) for conveying driving and/or cooling agents to and from the tool which coupling is formed with ducts (10-13) for connection at one end thereof to the conduits and at the other end thereof to the tool and with a further duct (14) which accommodates a light source (21) comprising a lamp and a lamp base operable to transmit light to an optical conductor in the tool, characterised in that the further duct (14) is open to the exterior only at its ends and is formed so as to be capable of receiving the light source (21) through one of said ends, and co-operating with a corresponding formation on the light source (21) releasably to locate the lamp in the further duct (14).

FIG.2

EP 0 070 194 A1

## COUPLING ASSEMBLY FOR A DRIVEN TOOL
## AND A COUPLING FOR USE THEREIN

The invention relates to a coupling assembly for connecting a rotary tool such as a dentists's drill to conduits conveying driving and/or cooling agents to the tool, and to a coupling for use in such an assembly.

Such couplings are provided with ducts for connection at one end thereof to the conduits and at the other end thereof to communicate with corresponding ducts in the tool, when the coupling is mounted thereon. A further duct is also provided to accommodate a source of light which can be arranged to transmit light to an optical conductor inserted in the tool and extending to the spot to be treated.

With a view to effective lighting of the spot to be treated, such instruments generally use a lamp as a light source, e.g. a halogen lamp emitting light through a part of the lamp bulb formed as a lens. The lamp must be positioned accurately in the coupling so that the end of the optical conductor illuminated thereby is, as far as possible, disposed co-axially with the lamp and at an axial distance from its lens adapted to the focal length of said lens.

In known couplings, the lamp forms part of the coupling and is fixedly embedded in the corresponding duct and thereby accurately fixed radially and axially in relation to the light conductor extending further, when the

0070194

coupling part is mounted on the instrument. A good light transmission from the lamp to the light conductor and a high light output at the spot to be treated are obtained thereby, and the lamp and its connections to the feed current are effectively protected against mechanical actions and to some extent against penetration of liquid, in particular of coolant, and the resulting corrosion and leakage current.

The embedding of the light source, e.g. a halogen lamp, in the coupling part presents, however, the drawback of not allowing the removal of the lamp which has a relatively limited life, e.g. 25-30 hours for a halogen lamp, in order to be replaced by a new one. It is necessary to replace and thus discard the whole coupling with the embedded lamp.

In order to allow a replacement of the light source, e.g. a halogen lamp, without having to discard the coupling as such, a solution has been proposed according to which the duct accommodating the lamp in the coupling is open at the outer surface of said coupling to form an elongated slot through which a lamp encapsulated beforehand in a cylindrical envelope and having its connecting wires secured to plug pins protruding from one end of the envelope can be inserted in, and removed from, a socket disposed in the duct.

Owing to the fact that the duct wherein the lamp is inserted is open through the slot, the lamp, although surrounded by the envelope, will not be optimally protected, especially not against moisture and in particular moisture originating from leaking coolant, and in this known coupling there will be some risk of corrosion at the lamp connections and of leakage current which may result in operational disturbances, in particular because, for reasons of safety, the lamp is operated with low voltages and correspondingly high currents of the order of magnitude of 750 mA.

The present invention has for its object to make it possible, in a coupling of the kind mentioned by way of introduction, to replace a defective lamp by another lamp in a particularly simple way and without having to discard the coupling as such.

A coupling assembly according to the invention is characterised in that the further duct is open to the exterior only at its ends and is formed so as to be capable of receiving the light source through one of said ends and co-operating with a corresponding formation on the light source releasably to locate the lamp in the further duct.

The invention also extends to a coupling characterised in that the further duct is open to the exterior only at its ends and is formed so as to be capable of receiving the light source through one of said ends and releasably locating the lamp therein.

Owing to the fact that the lamp is accommodated in an axially displaceable manner in the duct, it can easily be replaced through one of the duct ends or mouths without requiring that the duct be provided with an undesirable side opening outwards, while all the same, the lamp can be positioned accurately in the appurtenant duct so that when the coupling is in position, the lamp is situated co-axially in relation to, and at an optimal axial distance from, the light conductor end whereto the light is to be transmitted, viz. a distance adjusted to the focal length of a light emitting lens disposed in the lamp bulb, so as to allow as much light as possible to be transmitted from the lamp to the light conductor or its individual fibres. As the lamp is inserted in the duct through one of its ends, the lamp, when inserted or removed, will only have to be deplaced in the axial direction of the duct and no matter whether it is inserted and removed through one or the other of the duct mouths, it can in the terminal position be situated at any distance near the light conductor end, which means that its foremost part with the lens may be situated close to the duct mouth facing the drill and thus in the immediate vicinity of the light conductor end. In this position the lamp is secured effectively flush with the light conductor owing to the fact that the duct is open to the exterior only at its ends or mouths.

The invention will now be explained in more detail by way of example with reference to the drawing, in which:

Fig. 1 shows a dentist's drill with connections for driving and cooling fluids and with a light conductor connection, and

Fig. 2 shows an exploded view of a coupling assembly embodying the invention for use with the drill of Figure 1.

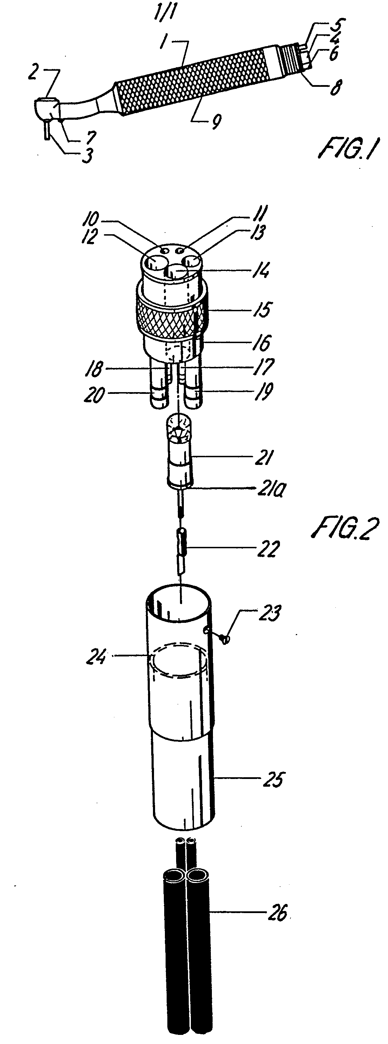

The drill shown in Fig. 1, which is designated generally by 1, comprises at one end a drill head 2 wherein a drill 3 is inserted, said drill being driven by a gas-operated e.g. air-operated turbine inserted in the drill head and not shown in the drawing. Close to the drill head is a schematically indicated light supplier 7 arranged to light the point of the drill 3 and thus the spot to be treated when the instrument is operated.

The light supplier 7 is connected to - or constituted by - a light conductor in the form of one or more light conducting fibres extending through the handle part 9 of the drill and ending in a light conductor connection 6 at the end of the drill turning away from the drill head. A duct for supplying driving air to the turbine, a duct for conveying return air from the turbine and ducts for supplying cooling air and cooling water to the drill point and to the spot to be treated, respectively, are furthermore extending through the handle part 9. At the connecting extremity of the instrument, these ducts open into connecting stubs of which, for the sake of clarity, only a connection 4 for driving air and a connection 5 for coolant are shown in Fig. 1.

To connect an instrument as shown in Fig. 1 with conduits, generally flexible tubes for supplying cooling air and cooling liquid and for supplying and removing driving air, use is made of a coupling assembly as shown in Fig. 2, where the coupling is designated generally by 16 while the tubes conveying driving and cooling agents are jointly designated by 26. These tubes 26 are passed through a sleeve 25 described in more detail below and they are drawn onto their respective connecting stubs 17, 18, 19 and 20 on the coupling 16. Through ducts 11, 10, 13 and 12, respectively, in the interior of the coupling these connecting stubs 17-20 lead to duct mouths which are brought into communication with the corresponding stubs on the instrument when the coupling 16 is mounted on the connecting extremity of the instrument 1 by means of a pipe union 15 provided with an internal thread and co-operating with an external thread 8 on the instrument.

In addition to said ducts 10-13, the coupling 16 comprises a further duct 14 which in the mounted position of the coupling 16 on the instrument 1 communicates with the light conductor connection 6 of said instrument.

In this duct 14 a light source 21 having an integral base and lamp e.g. a halogen lamp, can be inserted in the longitudinal direction of the duct, i.e. by a vertical movement as shown in Fig. 2, until a radial projection on the base of the light source shown in Fig. 2 as a circular flange 21a abuts against an arrest on the coupling 16, which arrest may suitably be constituted by the edge, indicated by dotted lines, of the duct 14 on the under-side of the coupling 16.

When the radial projection 21a of the light source 21 abuts against the arrest on the coupling or against the edge of the duct 14 on said coupling, a lens, not shown in detail, placed in the front part of the lamp 21 has an optimal axial distance from the light conductor connection 6 of the drill entering into the duct 14 when mounted, and the position of the duct 14 in the coupling part 16 as determined during the manufacture of the part ensures also the coaxial position of the light source in relation to the light conductor connection 6.

In this position, the light source 21 is thereafter fixed by means of a clamp bushing in the form of a sleeve 25 which is pushed axially over the coupling 16 until an internal projection which in Fig. 2 is shown as an inner radial projection 24 in the sleeve 25 urges the radial projection 21a of the light source 21, against the under-side of the coupling. The lamp is thereby maintained in exactly the desired position and the sleeve can be arrested in relation to the coupling by friction therewith or by means of a screw 23 which through a threaded hole in the sleeve may be screwed against the lateral wall of the coupling or into a depression provided therein.

Immediately below the light source 21, Fig. 2 shows a connecting part 22 provided at one end, (the upper one in Fig. 2) with a clamp bushing to be inserted on a plug pin projecting from the light source and at the other end, (the lower one in Fig. 2), with a soldering lug for connection to a feed current wire not shown in the drawing but which may suitably be inserted in the interval between the tubes 26. The other feed current wire may suitably be led through one of the tubes to one of the stubs 17-20 and be connected thereto by soldering.

Fig. 2 shows also that the part of the light source facing the lamp has a smaller diameter than the part facing the plug pin, the external diameter of this latter part fitting the inner diameter of the duct 14 with very little clearance corresponding for instance to a sliding fit, in view of the coaxial position of the light source in relation to the light conductor connection 6 on the drill 1.

When the thicker, guiding or centering part of the lamp base is moved out of the duct 14 to remove the light source, the following smaller section of the lamp base will make it possible to impart a leaning movement outwards to the light source, so that it is easier for the operator to get hold of it and remove it completely from the duct 14. The following insertion of another lamp is facilitated correspondingly, as it is only during the terminal insertion movement that the lamp will have to flush accurately with, i.e. be coaxial in relation to, the duct.

Whilst in the embodiment shown in Fig. 2, the arrest of the coupling 16 at the edge of the duct 14 on the terminal surface of the coupling co-operates with a radial projection 21a on the integral base of the light source, the lamp and the lamp base may be separable, in which case the arrest on the coupling can also co-operate with a radial projection, similar to the projection 21a, on a separable base which is otherwise like the lamp base of Fig. 2. The separable base is preferably a plug-in socket for accommodating a lamp which then is not itself provided with a projection. The radial projection on the base may, irrespective of whether it is separable from, or integral with, the lamp, be spaced from the terminal surface of the base and may be urged against an arrest provided on the terminal surface of the coupling or at some distance within the duct 14. The projection 24 of the sleeve 25 is then, in the mounted state, made to abut against the projection on the light source base or against the terminal surface thereof.

With a view to further simplifying and facilitating the insertion and removal of the lamp in the axial direction of the duct, the coupling may, during the manufacture of the ducts 12, 13 and 14 or in the course of a further processing, be arranged so that the duct 14, at least over part of its axial length, is in open connection with the duct 13 and/or the duct 12 conveying driving air and return air, respectively, to and from the turbine of the drill. This, in Fig. 2, corresponds to removing, in a manner not shown, the wall material between the duct 14 and the duct 13, over part or the whole of the axial length of the ducts, so as to make it possible, through the neighbour duct in question and the open connection with the duct 14 to exert a mechanical action on the lamp, e.g. with a sharp-pointed tool such as a screwdriver, from one end of the coupling, e.g. the end facing the drill, i.e. the upper end in Fig. 2.

If desired, it will then also be possible to insert and remove the lamp from this side of the coupling 16 facing the drill if, as indicated in the above, the radial projection 21a on the base is omitted and, for instance, the part 22 in Fig. 2 is replaced by a lamp holder or base which can accommodate a lamp in a disconnectable manner, e.g. through a plug/bushing connection, and is itself secured or arrested in the duct 14. Like the light source 21 in Fig. 2, such holder may be provided with a radial projection as the one shown at 21a in Fig. 2, whereby it can be arrested by squeezing between the projection 24 in the sleeve 25 and the underside of the coupling 16 as shown in Fig. 2, or it can be arrested permanently in the duct 14, e.g. embedded in, or stuck on, said duct. Securing or arresting by means of the inner projection 24 in the sleeve 25 can then be omitted.

Also in the embodiment of the coupling 16 where there is an open connection between the duct 14 and the duct 13 and/or the duct 12, the light source will still be entirely protected from the exterior, and it will also be protected from moisture, as the ducts 13 and 12 only convey driving air and return air, respectively. A further advantage achieved thereby is that the air will provide an effective cooling of the light source which, in the case of a halogen lamp, can without cooling reach a temperature of about 90°C. Cooling reduces the risk of being burnt on contact and, what is more important, it increases the life of the lamp, probably by 2-3 times.

Thus, as compared to the prior art, the present invention may result not only in a simplified replacement of the lamps but also in a reduction of the number of replacements owing to the fact that cooling increases the life of the lamps.

CLAIMS:

1.      A coupling assembly for a driven tool comprising a coupling (16) for connecting the tool to conduits (26) conveying driving and/or cooling agents to and from the tool which coupling is formed with ducts (10-13) for connection at one end thereof to the conduits and at the other end thereof to the tool and with a further duct (14) which accomodates a light source (21) comprising a lamp and a lamp base to transmit light to an optical conductor in the tool, characterised in that the further duct (14) is open to the exterior only at its ends and is formed so as to be capable of receiving the light source (21) through one of said ends   and co-operating with a corresponding formation of the light source (21) releasably to locate the lamp in the further duct.

2.      A coupling assembly as claimed in claim 1, characterised in that the light source (21) is located in the duct (14) by means of co-operation of a radial projection (21a) around the lamp base and an arrest at that end of the duct (14) that will be remote from the drill when the coupling is connected thereto.

3.     A coupling assembly as claimed in claim 2,
characterised in that it further comprises a sleeve (25)
provided with an internal projection (24) such that, when
the sleeve is in place over the coupling (16), the internal
projection urges the radial projection (21a) against the arrest.

4.     A coupling assembly as claimed in claim 3,
characterised in that it further comprises means (23) for
arresting the sleeve (25) with respect to the coupling (16).

5.     A coupling assembly as claimed in any preceding
claim, wherein the tool is gas-driven and/or gas-cooled,
characterised in that the further duct (14) is, over at
least part of its length, in open contact with the driving
and/or cooling agent conveying ducts (12,13).

6.     A coupling assembly as claimed in any preceding
claim, charaterised in that the lamp and lamp base are
integral.

7.     A coupling for use in an assembly as claimed in
claim 1, which coupling (16) is formed with ducts (10-13)
for connection at one end thereof to the conduits (26)
and at the other end thereof to the tool and with a further
duct (14) for accommodating a light source comprising a
lamp and a lamp base to transmit light to an optical
conductor in the tool, characterised in that the further duct (14) is open to the exterior only at its ends and is formed so as to be capable of receiving the light source through one of said ends and releasably locating the lamp therein.

8.    A coupling as claimed in claim 7, wherein the tool is gas-driven and/or gas-cooled, characterised in that the further duct (14) is, over at least part of its length, in open contact with the driving-agent and/or cooling agent conveying ducts (12,13).

9.    A coupling as claimed in claim 8, characterised in that it further includes the base for the light source fixedly located in the duct (14).

FIG.1

FIG.2

# EUROPEAN SEARCH REPORT

0070194

Application number

EP 82 30 3679

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-3 634 938 (HUTCHINSON) * Column 2, line 64 - column 3, line 4; column 3, line 74 - column 4, line 7; figure 8 * | 1,7 | A 61 C 1/08 A 61 C 1/18 |
| | --- | | |
| X | * Column 3, lines 62-73 * | 5,8 | |
| Y | | 2,3,6, 9 | |
| | --- | | |
| Y | US-A-4 118 105 (VOIGT) * Column 4, lines 4-18; figure 1 * | 1-3,6, 9 | |
| | --- | | |
| Y | GB-A-1 281 054 (VANN BROTHERS) * Page 2, lines 3-23; figure 3 * | 1 | TECHNICAL FIELDS SEARCHED (Int. Cl. 3) |
| | --- | | |
| E,A | US-A-4 330 274 (FRIEDMAN) * Column 3, lines 60-67; figure 3 * | | A 61 C |
| | ----- | | |

The present search report has been drawn up for all claims

| Place of search THE HAGUE | Date of completion of the search 12-10-1982 | Examiner DURAND-SMET J.E.J.S. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82